# EUROPÄISCHE PATENTANMELDUNG

(11) **EP 3 425 779 A1**
(43) Veröffentlichungstag der Anmeldung: **09.01.2019**
(21) Anmeldenummer: 17179735.0
(22) Anmeldetag: 05.07.2017
(51) Int. Cl.: H02K 17/16, H02K 15/00

(54) **KÄFIGLÄUFER EINER ASYNCHRONMASCHINE**

(71) Anmelder: Siemens Aktiengesellschaft, 80333 München (DE)
(72) Erfinder: Körner, Olaf, 90469 Nürnberg (DE); Oude Kotte, Freerk Jacobus, 90547 Stein (DE)

(57) **Zusammenfassung**

Die Erfindung betrifft einen Käfigläufer (3) einer Asynchronmaschine (1) mit in Nuten (8) eines magnetisch leitfähigen Grundkörpers (7) befindlichen Leitern (12), deren Endabschnitte (13) aus den Stirnseiten des magnetischen Grundkörpers (7) ragen und durch Kurzschlussringe (4) elektrisch leitend verbunden sind, wobei die Kurzschlussringe (4) zumindest abschnittsweise durch Ringsegmente (11) gebildet sind.

## Beschreibung

Die Erfindung betrifft einen Käfigläufer einer Asynchronmaschine und ein Verfahren zur Herstellung eines Käfigläufers einer Asynchronmaschine.

Käfigläufer bzw. Kurzschlussläufer für Asynchronmaschinen weisen ein Läuferblechpaket auf, in dem in axial verlaufenden Nuten Leiter angeordnet sind, die an den Stirnseiten des Läuferblechpakets jeweils durch Kurzschlussringe elektrisch miteinander verbunden sind. Je nach Leitermaterial werden dabei zur Herstellung Druckgussverfahren eingesetzt, die sowohl Leiter als auch Kurzschlussring in einem Arbeitsschritt generieren. Ebenso ist es vor allem bei größeren elektrischen Maschinen bekannt die Leiter mit Kurzschlussringen zu verlöten.

Aus der DE 10 2013 005 050 A1 ist ein Kurzschlussläufer bekannt, wobei ein Teil eines Kurzschlussrings des Kurzschlusskäfigs aus einem Scheibenpaket besteht, welches lagenweise aus Scheiben mit Ausnehmungen aufgebaut ist, durch welche die Enden der Käfigstäbe aus dem Läuferblechpaket hindurchtreten.

Nachteilig dabei, dass beim Stanzen dieser Scheiben eine vergleichsweise große Menge an Verschnitt/Schrott anfällt.

Ausgehend davon steht der Erfindung die Aufgabe zugrunde, einen Käfigläufer einer Asynchronmaschine bereitzustellen, bei dessen Herstellung, vergleichsweise einfach und insbesondere die Herstellung des Kurzschlussringes vergleichsweise weniger Verschnitt und Schrott anfällt.

Die Lösung der gestellten Aufgabe gelingt durch einen Käfigläufer einer Asynchronmaschine mit in Nuten eines magnetisch leitfähigen Grundkörpers befindlichen Leitern, deren Endabschnitte aus den Stirnseiten des magnetischen Grundkörpers ragen und durch Kurzschlussringe elektrisch leitend verbunden sind, wobei die Kurzschlussringe zumindest abschnittsweise durch Ringsegmente gebildet sind.

Die Lösung der gestellten Aufgabe gelingt ebenfalls durch ein Verfahren zur Herstellung eines Käfigläufer einer Asynchronmaschine mit in Nuten eines magnetisch leitfähigen Grundkörpers befindlichen Leitern, deren Endabschnitte aus den Stirnseiten des magnetischen Grundkörpers ragen und durch Kurzschlussringe elektrisch leitend verbunden sind, wobei die Kurzschlussringe zumindest abschnittsweise durch Ringsegmente gebildet sind durch folgende Schritte:
- Bereitstellen eines magnetisch leitfähigen Grundkörpers mit Nuten,
- Einsetzen zumindest eines Leiterstabes in jeweils eine Nut, derart, dass die jeweiligen Endabschnitte der Leiterstäbe jeweils axial an den Stirnseiten aus dem magnetischen Grundkörper ragen,
- Anordnen von Ringsegmenten auf den Endabschnitten der Leiterstäbe,
- elektrisches Kontaktieren der Ringsegmente untereinander und/oder mit den Leiterstäben.

Durch den erfindungsgemäßen Käfigläufer aus Ringsegmenten wird nunmehr der Stanzabfall, insbesondere bei der Herstellung des Kurzschlussrings wesentlich verringert und es kann somit ein geschweißter Käfigläufer, bereitgestellt werden, der sich vergleichsweise wirtschaftlich herstellen lässt. Als Material der Ringsegmente und/oder der Leiter bzw. Leiterstäbe eignen sich Aluminium, Aluminiumlegierungen, Stahllegierungen, insbesondere aber auch Kupfer und Kupferlegierungen wie Kupfer-Chrom-Zirkon (CuCr1Zr).

Eine Asynchronmaschine mit einem Käfigläufer aus Kupfer oder Kupferlegierungen weist eine vergleichsweise hohe Energieeffizienz auf. Es sind dabei die Leiter bzw. die Leiterstäbe, als auch der Kurzschlussring des Käfigläufers aus Kupfer oder Kupferlegierungen.

Sowohl die Leiterstäbe, als auch die Ringsegmente mit Ausnehmungen werden vorab gefertigt.

Die Kurzschlussringe können dabei entweder separat gefertigt werden und als Einheit axial auf den Endabschnitten der Leiter positioniert, fixiert und kontaktiert werden.

Ebenso ist es möglich die Ringsegmente auf die vorhandene Einheit Welle, magnetischer Grundkörper und in Nuten eingelegte Leiter, Ringsegment für Ringsegment auf die Endabschnitte zu setzen und damit den Kurzschlussring auf jeder Stirnseite des magnetischen Grundkörper sukzessive herzustellen.

Der Käfigläufer weist einen magnetischen Grundkörper auf, der aus einem magnetisch leitfähigen Sintermaterial oder aus axial geschichteten Dynamoblechen aufgebaut ist. An der äußeren Mantelfläche des magnetischen Grundkörpers des Käfigläufers sind Nuten zur Aufnahme der Leiterstäbe vorhanden. Dabei sind die Nuten geschlossen oder halboffen ausgeführt. Die Nuten liegen somit am Luftspalt der Asynchronmaschine.

Erfindungsgemäß korrespondieren dabei die Ausnehmungen der Ringsegmente des Kurzschlussrings mit ihrer axialen Ausrichtung mit den jeweiligen Nuten des magnetischen Grundkörpers.

In einer Ausführungsform werden dabei sowohl die Ausnehmungen der Ringsegmente, als auch die Nuten des magnetischen Grundkörpers, insbesondere aus Blechen des Blechpakets ausgestanzt. Die Ringsegmente nehmen dabei - in Umfangsrichtung betrachtet - vorgebbare Segmente, also die Hälfte, ein Drittel oder ein Viertel eines Gesamtringes, also einer Schicht ein. Derartige Ringsegmente können aus einem vorhandenen Blech-Coil oder dickeren Plattenmaterial unter Vermeidung von Verschnitt besser ausgestanzt werden.

Beim umfänglichen Zusammensetzen der Ringsegmente zumindest zu einer Schicht des Kurzschlussringes, entstehen einzelne

Lagen oder Schichten des Kurzschlussringes. Bei mehreren Lagen der Kurzschlussringe bietet sich ein - in Umfangsrichtung betrachtet - versetztes Stapeln der Ringsegmente an, so dass die umfänglichen Stoßstellen/Segmentgrenzen unterschiedlicher Schichten, zueinander um einen vorgebbaren Winkel versetzt angeordnet sind.

Die Ringsegmente werden zur Bildung des Kurzschlussrings vorab miteinander verschweißt, derart, dass die Ausnehmungen im Wesentlichen axial fluchten und somit danach als jeweils ein Gesamtring auf die Endabschnitte der Leiterstäbe an der Stirnseite des magnetischen Grundkörpers axial aufgesetzt werden. Dabei oder anschließend kann eine zusätzliche Kontaktierung, insbesondere eine Verschweißung des Kurzschlussringes mit den Endabschnitten der Leiterstäbe erfolgen.

Alternativ dazu kann auch jedes einzelne Ringsegment axial auf die Endabschnitte der aus dem magnetischen Grundkörper ragenden Leiterstäbe gesetzt werden. Dabei entsteht der Kurzschlussring am magnetischen Grundkörper Schicht für Schicht. Es kann dabei nach jeder Schicht eine Kontaktierung der Ringsegmente untereinander an den Stoßstellen und/oder mit den jeweiligen Leiterstäben erfolgen.

Als elektrische Kontaktierung von Leitern mit den Kurzschlussringen und/oder den Ringsegmenten untereinander eignen sich Schweißverfahren (z.B. Laserstrahlschweißen, Elektronenstrahlschweißen)ebenso wie die bekannten Lötverfahren. Grundsätzlich sind die Kontaktierverfahren u.a. den zu kontaktierenden Materialien und den Fertigungsverfahren anzupassen.

Um diese Kontaktierverfahren effizient umzusetzen ist es vorteilhaft, wenn die Ringsegmente Anfasungen, z.B. an ihrem äußeren Rand zu Aufnahme einer Schweißnaht aufweisen. Vorgegebene radial verlaufende Spaltmaße zwischen den einzelnen Schichten des Kurzschlussringes und/oder zwischen den Endabschnitten der Leiter und den Ausnehmungen des Kurzschlussringes eignen sich zur Aufnahme und Weiterleitung eines Lotes für ein Lötverfahren.

Insbesondere für den Lötvorgang ist es vorteilhaft, wenn zumindest die letzte Schicht der Ringsegmente des Kurzschlussringes keine Ausnehmungen aufweist. Diese letzte Schicht oder die letzten Schichten sind von der Stirnseite des magnetischen Grundkörpers abgewandt, so dass sich axial ausgebildete Sacklöcher zur Aufnahme der Endabschnitte der Leiter bzw. Leiterstäbe ergeben. Diese Sacklöcher bilden damit eine Art Lötwanne für das Lot um die Endabschnitte der Leiter mit dem Kurzschlussring zu kontaktieren.

Die erfindungsgemäße Gestaltung des Kurzschlussringes eignet sich auch für Käfigläufer mit Nutschrägung. Es sind dabei ggf. die Ausnehmungen, insbesondere des vorgefertigten Kurzschlussringes in Abhängigkeit des Schrägungswinkels etwas größer zu dimensionieren, um die Endabschnitte in den Ausnehmungen positionieren zu können.

Alternativ dazu kann die Schrägung auch erst mit den bereits auf den Endabschnitten der Leiter angeordneten Kurzschlussringen durch ein vorgegebenes Verwinden um ein Vielfaches einer Nutteilung erfolgen.

Die Erfindung sowie wesentliche Ausgestaltungen der Erfindung werden anhand prinzipiell dargestellter Ausführungsbeispiele näher erläutert. Darin zeigen:
- FIG 1: einen Längsschnitt durch eine Asynchronmaschine,
- FIG 2: eine Seitenansicht eines Kurzschlussläufers,
- FIG 3: Segmente eines Viertelringes,
- FIG 4: Ringsegment an einem Blechpaket mit Leiterstäben,
- FIG 5: Halbkreis-Ringsegmente,
- FIG 6: einen Blechpaket mit Leiterstäben in halboffenen Nuten,
- FIG 7 bis 9: verschiedene Ringsegmente,
- FIG 10: Seitenansicht eines Käfigläufers,
- FIG 11: weitere Ringsegmente,
- FIG 12: eine Detailansicht,
- FIG 13: Seitenansicht eines Käfigläufers mit Kurzschlussring.

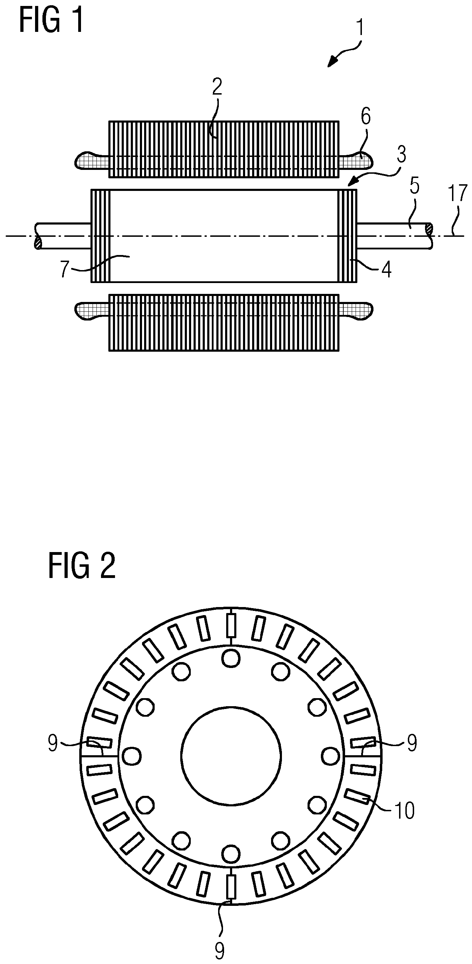

FIG 1 zeigt eine Asynchronmaschine 1 mit einem Stator 2 und einem Kurzschlussläufer bzw. Käfigläufer 3, der an seinen axialen Enden, also an den Stirnseiten seines magnetischen Grundkörpers 7, insbesondere seines Blechpakets Kurzschlussringe 4 ausbildet. Der Käfigläufer 3 ist mit einer Welle 5 drehfest verbunden. Ein Wicklungssystem 6, das in nicht näher dargestellten Nuten des Stators 2 angeordnet ist, generiert durch elektromagnetische Wechselwirkung mit dem Käfigläufer 3 ein Drehmoment, das an der Welle 5 abgegriffen werden kann.

Der Käfigläufer 3 ist durch axial geschichtete Läuferbleche aufgebaut, die im Wesentlichen axial verlaufende Nuten 8 aufweisen. In den Nuten 8 sind Leiter 12 bzw. Leiterstäbe angeordnet, die über die Stirnseiten des Läuferblechpakets 7 des Käfigläufers 3 ragen und durch den Kurzschlussring 4 elektrisch leitend miteinander an den Endabschnitten 13 der Leiter 12 verbunden sind. Der Kurzschlussring 4 weist dazu in Anzahl und/oder Form im Wesentlichen korrespondierende Ausnehmungen 10 auf, in die die Endabschnitte 13 der Leiterstäbe 12 ragen.

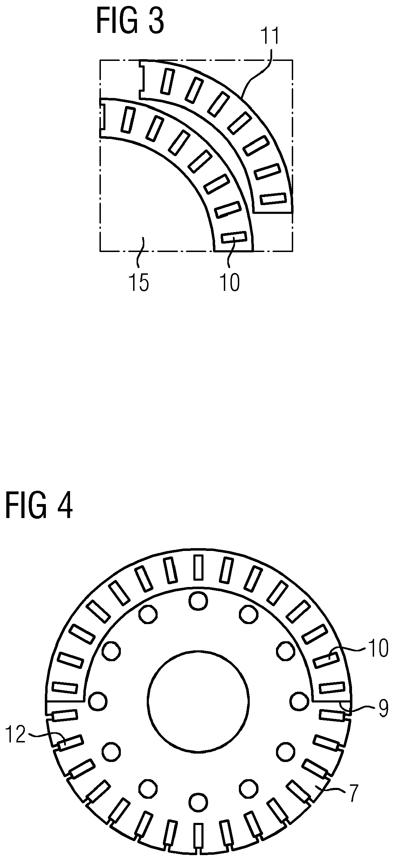

Der Kurzschlussring 4 ist durch Ringsegmente 11 aufgebaut, die beispielsweise einen vorgebbaren Bruchteil des Umfangs also z.B. ein Viertel, ein Drittel oder eine Hälfte des Umfangs einnehmen. Dies ist u.a. der FIG 2 oder FIG 3 zu entnehmen.

FIG 3 ist außerdem ein Blechabschnitt oder Plattenmaterial 15 zu entnehmen aus dem die Ringsegmente 11 unter Vermeidung von Stanzabfall gestanzt werden.

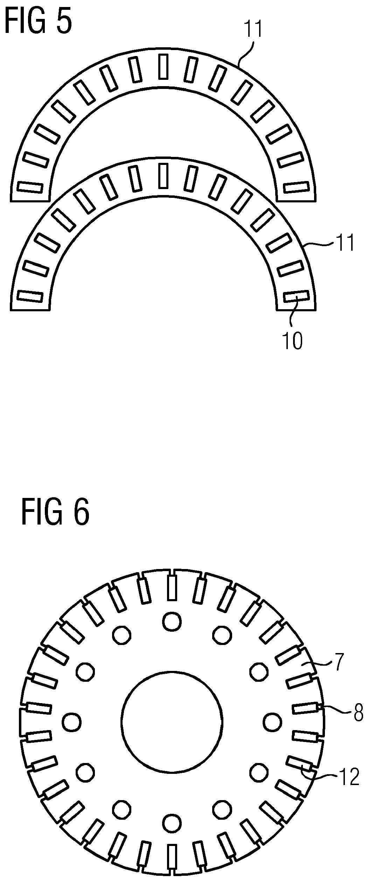

FIG 4 zeigt ein hälftiges Ringsegment 11 an der Stirnseite des Kurzschlussläufers 3, welches Ringsegment 11 somit 180° des Umfangs des Kurzschlussringes 4 einnimmt. Diese Ringsegmente 11 können mit den erforderlichen Ausnehmungen und/oder den Gestaltungen der Stoßstellen beispielsweise gemäß FIG 5 aus einem Blech-Coil oder Plattenmaterial 15 in einfacher Art und Weise unter Vermeidung von zu viel Schnittabfall ausgestanzt werden. Dies ist ebenso den weiteren Figuren zu entnehmen.

FIG 6 zeigt in Seitenansicht die Stirnseite des Läuferblechpakets 7 mit in halboffenen Nuten 8 eingesetzten Leiterstäben bzw. Leitern 12 ohne Ringsegmente 11.

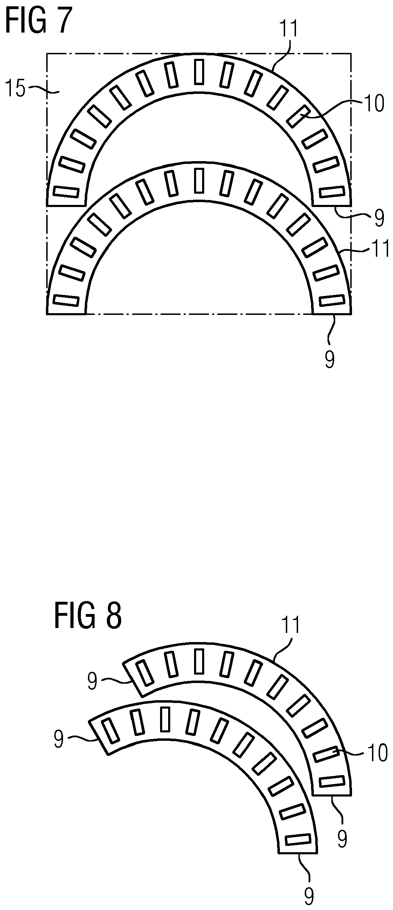

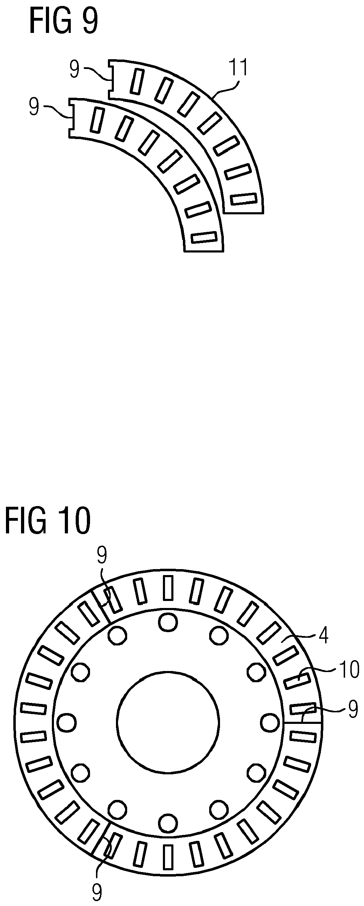

Für die Kurzschlussringe 4 sind dabei Ringsegmente 11 nach FIG 7 und/oder FIG 8 und/oder FIG 9 einsetzbar. Vorteilhafterweise wird im axialen Verlauf der Schichtung darauf geachtet, dass die Segmentgrenzen bzw. Stoßstellen der Ringsegmente einer Schicht nicht axial über die Segmentgrenzen bzw. Stoßstellen der Ringsegmente einer folgenden oder benachbarten Schicht zum Liegen kommen, sondern um einen vorgebbaren Winkel versetzt angeordnet sind. Dies stabilisiert den Kurzschlussring 4.

Die Segmentgrenzen bzw. Stoßstellen 9 der Ringsegmente 11 verlaufen radial senkrecht zur Welle 5. Ergänzend oder alternativ sind diese Segmentgrenzen bzw. Stoßstellen 9 der Ringsegmente 11 schwalbenschwanzähnlich gemäß FIG 9 ausgebildet, um die radiale Fixierung und Positionierung der Ringsegmente 11, insbesondere einer Schicht u.a. während der Fertigung des Kurzschlussringes 4 zu gewährleisten.

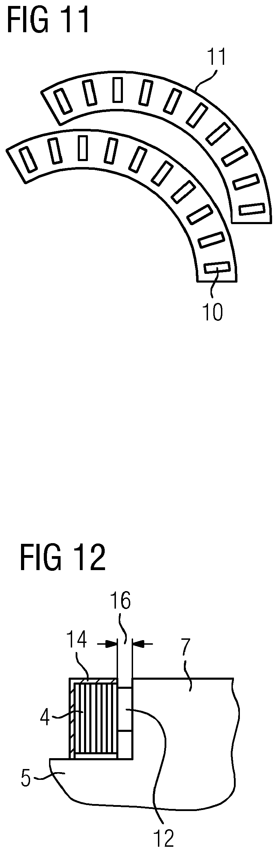

FIG 10 zeigt in Seitenansicht einen Käfigläufer 3 mit Kurzschlussring 4, der in dieser Darstellung drei Ringsegmenten 11 gemäß FIG 11 in der dargestellten Schicht zeigt.

Die Kurzschlussringe 4 eines Käfigläufers 3 ist entweder direkt an der Stirnseite des magnetischen Grundkörpers 7 oder davon beabstandet angeordnet, wie dies der FIG 12 zu entnehmen ist. Dabei weist der Kurzschlussring 4 zu der Stirnseite des Läuferblechpakets bzw. magnetischen Grundkörpers 7 einen Abstand 16 auf.

Um auch hohe Drehzahlen der Asynchronmaschine 1 zu gewährleisten ist es vorteilhaft, zumindest den Kurzschlussring 4 mit einer Bandage oder einer Stahlkappe 14 zu gemäß FIG 12 zu versehen.

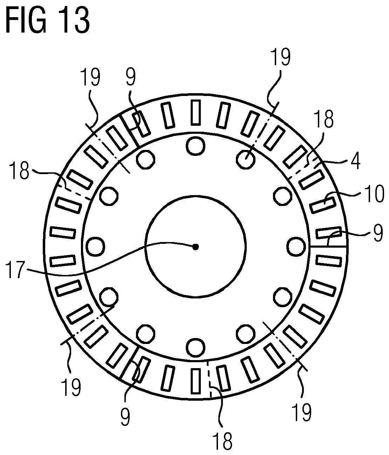

FIG 13 zeigt in Seitenansicht einen Käfigläufer 3 mit einem Kurzschlussring 4, der aus zumindest drei Schichten von Ringsegmenten 11 aufgebaut ist. Ausgehend von der Stirnseite des Blechpakets 7 des Käfigläufers 3 befinden sich vier, nicht notwendigerweise identische Ringsegmente 11, die zumindest umfänglich an den Stoßstellen 19 kontaktiert sind. In der sich daran axial anschließenden Schicht des Kurzschlussrings 4 befinden sich drei nicht notwendigerweise identische Ringsegmente 11, die zumindest an den umfänglichen Stoßstellen 18 dieser Schicht kontaktiert sind. In der sich daran axial anschließenden Schicht des Kurzschlussrings 4 befinden sich drei in diesem Fall gleiche, aber auch hier nicht notwendigerweise identische Ringsegmente 11, die zumindest an den umfänglichen Stoßstellen 9 dieser Schicht kontaktiert sind.

Es erfolgt also eine oben beschriebene Kontaktierung in Umfangsrichtung und/oder axialer Richtung innerhalb der Schichten des Kurzschlussrings 4.

Durch die Anzahl der Schichten des Kurzschlussrings 4 und/oder der axialen Dicke des angezogenen Blechs oder des Plattenmaterials 15 wird die axiale Dicke des Kurzschlussrings 4 beeinflusst. Danach wird auch Stromtragfähigkeit des Kurzschlussrings 4 ausgelegt.

Derartige Asynchronmaschinen werden bei Traktionsantrieben von Fahrzeugen aller Art an Land in Wasser und in der Luft eingesetzt. Ebenso sind diese Asynchronmaschinen auch in der Nahrungsmittel- und Textilindustrie als auch in der Rohstoffindustrie einzusetzen.

## Patentansprüche

1. Käfigläufer (3) einer Asynchronmaschine (1) mit in Nuten (8) eines magnetisch leitfähigen Grundkörpers (7) befindlichen Leitern (12), deren Endabschnitte (13) aus den Stirnseiten des magnetischen Grundkörpers (7) ragen und durch Kurzschlussringe (4) elektrisch leitend verbunden sind, wobei die Kurzschlussringe (4) zumindest abschnittsweise durch Ringsegmente (11) gebildet sind.

2. Käfigläufer (3) nach Anspruch 1, **dadurch ge** - **kennzeichnet**, dass die Kurzschlussringe (4) in Umfangsrichtung und/oder axialer Richtung zumindest zwei Ringsegmente (11) aufweisen.

3. Käfigläufer (3) nach Anspruch 1 oder 2, **dadurch gekennzeichnet , dass** die Ringsegmente (11) eines Kurzschlussrings (4) in axialer Richtung schichtweise angeordnet sind.

4. Käfigläufer (3) nach Anspruch 3, **dadurch ge**- **kennzeichnet,** dass die Stoßstellen (9,18,19) der Ringsegmente (11) einer Schicht bzgl. der Stoßstellen (9,18, 19) der Ringsegmente (11) einer anderen Schicht in Umfangsrichtung betrachtet um einen vorgebbaren Winkel versetzt angeordnet sind.

5. Asynchronmaschine (1) mit einem Käfigläufer (3) nach einem der Ansprüche 1 bis 4.

6. Verfahren zur Herstellung eines Käfigläufers (3) nach einem der vorhergehenden Ansprüche durch folgende Schritte:
- Bereitstellen eines magnetisch leitfähigen Grundkörpers (7) mit Nuten (8),
- Einsetzen zumindest eines Leiterstabes (12) in jeweils eine Nut (8), derart, dass die jeweiligen Endabschnitte (13) der Leiterstäbe (12) jeweils axial an den Stirnseiten aus dem magnetischen Grundkörper (7) ragen,
- Anordnen von Ringsegmenten (11) auf den Endabschnitten (13) der Leiterstäbe (12),
- elektrisches Kontaktieren der Ringsegmente (11) untereinander und/oder mit den Leiterstäben (12).

7. Verfahren zur Herstellung eines Käfigläufers (3) nach Anspruch 6, **dadurch gekennzeichnet , dass** das Anordnen der Ringsegmente (11) axial schichtartig ausgehend von der jeweiligen Stirnseite des magnetischen Grundkörpers (7) erfolgt.

8. Verfahren zur Herstellung eines Käfigläufers (3) nach Anspruch 7, **dadurch gekennzeichnet , dass** die Stoßstellen (9,18,19) der Ringsegmente (11) einer Schicht bzgl. der Stoßstellen (9,18,19) der Ringsegmente (11) einer anderen Schicht in Umfangsrichtung betrachtet um einen vorgebbaren Winkel versetzt angeordnet werden.

9. Verfahren zur Herstellung eines Käfigläufers (3) nach Anspruch 8, **dadurch gekennzeichnet, dass** die Stoßstellen (9,18,19) der Ringsegmente (11) einer Schicht bzgl. der Stoßstellen (9,18,19) der Ringsegmente (11) einer darauf axial folgenden Schicht in Umfangsrichtung betrachtet um einen vorgebbaren Winkel versetzt angeordnet werden.
